# EUROPEAN PATENT SPECIFICATION

(11) **EP 1 976 922 B1**
(45) Date of publication and mention of the grant of the patent: **18.08.2010**
(21) Application number: 07870650.4
(22) Date of filing: 04.01.2007
(51) Int. Cl.: C08K 3/34, C08K 5/09, C08L 69/00

(54) **THERMOPLASTIC COMPOSITION CONTAINING POLYCARBONATE-POLYESTER AND NANOCLAY**
THERMOPLASTISCHE ZUSAMMENSETZUNG MIT POLYCARBONATPOLYESTER UND NANOTON
COMPOSITION THERMOPLASTIQUE CONTENANT UN MÉLANGE POLYCARBONATE-POLYESTER ET UNE NANOARGILE

(30) Priority: 09.01.2006 US 328397
(43) Date of publication of application: 08.10.2008
(73) Proprietor: Bayer MaterialScience LLC, Pittsburgh, PA 15205-9741 (US)
(72) Inventor: CHUNG, James Y.J., Wexford, PA 15090-9432 (US); MASON, James P., Carnegie, PA 15106 (US)
(74) Representative: Klimiuk, Meike
(86) International application number: PCT/US2007/000090
(87) International publication number: WO 2008/063198

(56) References cited:
- US-A- 4 460 735
- US-A- 4 883 840
- US-A1- 2005 065 263

## Description

### FIELD OF THE INVENTION

The invention concerns thermoplastic molding compositions and more particularly, clay-filled compositions that contain a blend of polycarbonate and polyester.

### SUMMARY OF THE INVENTION

A thermoplastic composition comprising a resinous blend of (A) aromatic polycarbonate and (B) polyester, (C) nanoclay and (D) carboxylic acid is disclosed. The composition features improved melt stability and impact strength over corresponding compositions that contain no acid. The nanoclay is present in an amount of 0.1 to 30 percent relative to the weight of the resinous blend, and the acid is present in an amount of 1 to 20 percent relative to the weight of the nanoclay. The average thickness of the clay particles is about 1 to 100 nm, and their average lengths and average widths, independently one of the other are 50 to 700 nm.

### BACKGROUND OF THE INVENTION

Polycarbonate resins are well known and have long been used for a variety of applications because of their characteristic combination of good mechanical and physical properties. However, their stiffness (flexural modulus) is inadequate for certain structural applications such as housings for power tools. Glass fibers incorporated in polycarbonate have largely addressed this shortcoming yet have adversely affected the appearance of the molded parts. Blends of polycarbonate with thermoplastic polyester are known. Commercial compositions containing such blends are commercially available , e.g. from Bayer MaterialScience as Makroblend compositions.

Nanoclays, clays having particle size smaller than 100 nm, are commercially available. Their utility in polymeric matrices have been widely disclosed in the literature, e.g., J. Materials Res., 1993, Volume 8, page 1179; J. Polym. Sci., Part A: Polym. Chem., 1993, volume 31, page 2493. Nanocomposites are a class of materials which feature a phase having particle dimensions in the range 1 to 100 nm. The art has now recognized that the inclusion of these materials in polymeric matrices result in composites having better mechanical properties than do their counterparts that include micro- and macro- sized particles.

Polycarbonate composites containing organically modified nanoclay (organoclay), the modification by tertiary- and quaternary- ammonium salts, were reported by P. J. Yoon, D. L. Hunter and D. R. Paul, in Polycarbonate Nanocomposites. Part 1, Effect of Organoclay Structure on Morphology and Properties, Polymer, 44, 5323 (2003), and by the same authors in Polycarbonate Nanocomposites. Part 2, Degradation and color Formation, Polymer 44, 5341 (2003). Geralda Severe, Alex J. Hsieh and Bryan E. Koene reported relevant polycarbonate composites where the incorporated nanoclay has been modified with C₁₆- and C₁₈-tributyl phosphonium in a paper entitled Effect of Layered Silicates on Thermal Characteristics of Polycarbonate Nanocomposites, Society of Plastics Engineers, ANTEC 2000, page 1523-6.

The art also recognizes that swelling agents, such as long-chain organic cations, and water-soluble oligomers or polymers can be intercalated or absorbed between adjacent layers of clay, and thus increase the interlayer spacing. U.S. Patent 5,552,469 and WO 93/04117 among others, disclosed methods for treating relevant silicates resulting in imparting greater mechanical reinforcement to polymeric matrices in which they are incorporated.

U.S. Patent 5,760,121 disclosed nanocomposites that contain a matrix polymer and exfoliated intercalates formed by contacting a phyllosilicate with a polymer to adsorb or intercalate the polymer between adjacent phyllosilicate platelets. Sufficient polymer is adsorbed between adjacent phyllosilicate platelets to expand the adjacent platelets to a spacing of 5 to 100 angstroms so that the intercalate easily can be exfoliated by mixing it with an organic solvent or a polymer melt. Also relevant are the disclosures in U.S. Patents 5,747,560 and 5,385,776.

U.S. Patent 6,610,770 disclosed a flame retardant polymer composition made from a polymer blended using a defined process with a smectite clay that has been reacted with a specified mixture of organic materials. The flame-retardant properties are said to depend on the degree of dispersion of a smectite organoclay in the polymeric matrix. Proper functioning of the flame retardant polymer compositions is said to require the organoclay to be dispersed in the polymer such that it is not completely exfoliated. Also, U.S. Patent 6,521,690 disclosed a composition that includes smectite clay modified with an organic chemical composition and a polymer. The composition consists of an organic chemical/smectite clay intercalate that has been ion-exchanged and reacted and intercalated with one or more quarternary ammonium compounds and an anionic material and further blended into a polymer resin to make a nanocomposite composition.

### DETAILED DESCRIPTION OF THE INVENTION

Compositions containing a polymeric matrix and clay are known. Although the flexural modulus of such compositions wherein matrix is polycarbonate is appreciably greater than that of the neat resin, a noticeable degradation, expressed in terms of the marked increase in melt flow rate and decline in impact properties, results upon extrusion compounding of these compositions and upon molding of articles therefrom. The invention is predicated on the findings that adding a carboxylic acid in small amount to a blend of polycarbonate, polyester and nanoclay stabilizes the composition, resulting in stabilized compositions that exhibit good impact strength.

Polycarbonates (component A) suitable in the context of the invention include homopolycarbonates, copolycarbonates and mixtures thereof. Included in the term copolycarbonate as used herein are polyestercarbonates wherein the ester linkages are present in a minor molar amount relative to the carbonate linkages.

Polycarbonates are known and their structure and methods of preparation have been disclosed, for example, in U.S. Patents 3,030,331; 3,169,121; 3,395,119; 3,729,447; 4,255,556; 4,260,731; 4,369,303, 4,714,746 and 6,306,507 all of which are incorporated by reference herein. The polycarbonates generally have a weight average molecular weight of 10,000 to 200,000, preferably 20,000 to 80,000 and their melt flow rate, per ASTM D-1238 at 300°C, under1.2 Kg load, is about 1 to about 65 g/10 min., preferably about 2 to 35 g/10 min. They may be prepared, for example, by the known diphasic interface process from a carbonic acid derivative such as phosgene and dihydroxy compounds by polycondensation (see German Offenlegungsschriften 2,063,050; 2,063,052; 1,570,703; 2,211,956; 2,211,957 and 2,248,817; French Patent 1,561,518; and the monograph by H. Schnell, "Chemistry and Physics of Polycarbonates", Interscience Publishers, New York, New York, 1964, all incorporated herein by reference).

In the present context, dihydroxy compounds suitable for the preparation of the polycarbonates of the invention conform to the structural formulae (1) or (2). 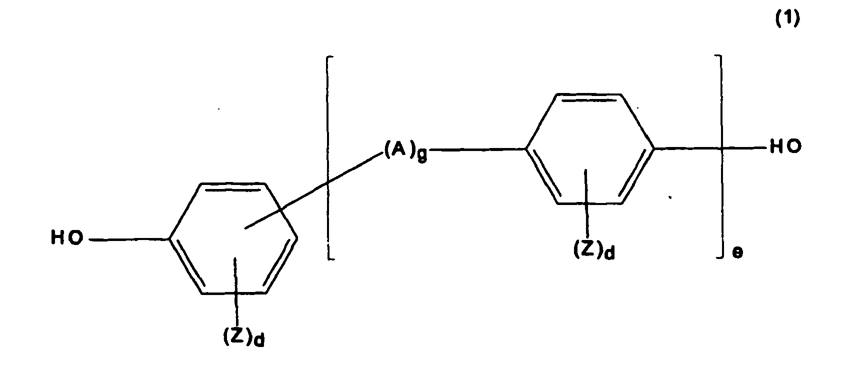 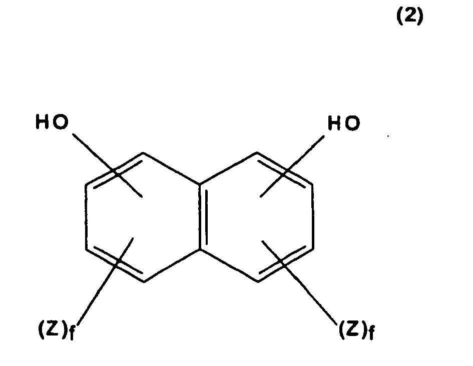 wherein
- A: denotes an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a carbonyl group, an oxygen atom, a sulfur atom, -SO- or -SO₂ or a radical conforming to 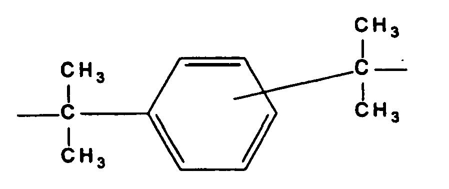
- e and g: both denote the number 0 to 1;
- Z: denotes F, Cl, Br or C₁-C₄-alkyl and if several Z radicals are substituents in one aryl radical, they may be identical or different from one another;
- d: denotes an integer of from 0 to 4; and
- f: denotes an integer of from 0 to 3.

Among the dihydroxy compounds useful in the practice of the invention are hydroquinone, resorcinol, bis-(hydroxyphenyl)-alkanes, bis-(hydroxyphenyl)-ethers, bis-(hydroxyphenyl)-ketones, bis-(hydroxy-phenyl)-sulfoxides, bis-(hydroxyphenyl)-sulfides, bis-(hydroxyphenyl)-sulfones, and α,α-bis-(hydroxyphenyl)-diisopropylbenzenes, as well as their nuclear-alkylated compounds. These and further suitable aromatic dihydroxy compounds are described, for example, in U.S. Patents 5,105,004; 5,126,428; 5,109,076; 5,104,723; 5,086,157; 3,028,356; 2,999,835; 3,148,172; 2,991,273; 3,271,367; and 2,999,846, ally incorporated herein by reference.

Further examples of suitable bisphenols are 2,2-bis-(4-hydroxy-phenylypropane (bisphenol A), 2,4-bis-(4-hydroxyphenyl)-2-methy)-butane, 1,1-bis-(4-hydroxyphenyl)-cyclohexane, α,α'-bis-(4-hydroxyphenyl)-p-diisopropylbenzene, 2,2-bis-(3-methyl-4-hydroxyphenyl)-propane, 2,2-bis-(3-chloro-4-hydroxyphenyl)-propane, bis-(3,5-dimethyl-4-hydroxyphenyl)-methane, 2,2-bis-(3,5-dimethyl-4-hydroxyphenyl)-propane, bis-(3,5-dimethyl-4-hydroxyphenyl)-sulfide, bis-(3,5-dimethyl-4-hydroxyphenyl)-sulfoxide, bis-(3,5-dimethyl-4-hydroxyphenyl)-sulfone, dihydroxybenzophenone, 2,4-bis-(3,5-dimethyl-4-hydroxyphenyl)-cyclohexane, α,α'-bis-(3,5-dimethyl-4-hydroxyphenyl)-p-diisopropyl-benzene and 4,4'-sulfonyl diphenol.

Examples of particularly preferred aromatic bisphenols are 2,2-bis-(4-hydroxyphenyl)-propane, 2,2-bis-(3,5-dimethyl-4-hydroxyphenyl)-propane, 1,1-bis-(4-hydroxyphenyl)-cyclohexane and 1,1-bis-(4-hydroxy-phenyly)-3,3,5-trimethylcyclohexane.

The most preferred bisphenol is 2,2-bis-(4-hydroxyphenyl)-propane (bisphenol A).

The polycarbonates of the invention may entail in their structure units derived from one or more of the suitable bisphenols.

Among the resins suitable in the practice of the invention are polyestercarbonate based on resorcinol and bisphenol A (registry number 265997-77-1), phenolphthalein-based polycarbonate, copolycarbonates and terpoly-carbonates such as are described in U.S. Patents 6,306,507, 3,036,036 and 4,210,741, all incorporated by reference herein.

The polycarbonates of the invention may also be branched by condensing therein small quantities, e.g., 0.05 to 2.0 mol % (relative to the bisphenols) of polyhydroxyl compounds.

Polycarbonates of this type have been described, for example, in German Offenlegungsschriften 1,570,533; 2,116,974 and 2,113,374; British Patents 885,442 and 1,079,821 and U.S. Patent 3,544,514. The following are some examples of polyhydroxyl compounds which may be used for this purpose: phloroglucinol; 4,6-dimethyt-2,4,6-tri-(4-hydroxyphenyl)-heptane; 1,3,5-tri-(4-hydroxyphenyl)-benzene; 1,1,1-tri-(4-hydroxyphenyl)-ethane; tri-(4-hydroxyphenyl)phenylmethane; 2,2-bis-[4,4-(4,4'-dihydroxydiphenyl)]-cyclohexyl-propane; 2,4-bis-(4-hydroxy-1-isopropylidine)-phenol; 2,6-bis-(2'-dihydroxy-5'-methylbenzyl)-4-methylphenol; 2,4-dihydroxybenzoic acid; 2-(4-hydroxyphenyl)-2-(2,4-dihydroxyphenyl)-propane and 1,4-bis-(4,4'-dihydroxytriphenylmethyl)-benzene. Some of the other polyfunctional compounds are 2,4-dihydroxy-benzoic acid, trimesic acid, cyanuric chloride and 3,3-bis-(4-hydroxyphenyl}-2-oxo-2,3-dihydroindole.

In addition to the polycondensation process mentioned above, other processes for the preparation of the polycarbonates of the invention are polycondensation in a homogeneous phase and transesterification. The suitable processes are disclosed in the incorporated herein by reference, U.S. Patents 3,028,365; 2,999,846; 3,153,008; and 2,991,273.

The preferred process for the preparation of polycarbonates is the interfacial polycondensation process. Other methods of synthesis in forming the polycarbonates of the invention, such as disclosed in U.S. Patent 3,912,688, incorporated herein by reference, may be used.

Suitable polycarbonate resins are available in commerce, for instance, Makrolon 2400, Makrolon 2458, Makrolon 2600, Makrolon 2800 and Makrolon 3100, all of which are bisphenol based homopolycarbonate resins differing in terms of their respective molecular weights and **characterized in that** their melt flow indices (MFR at 300 °C, 1.2 Kg) per ASTM D-1238 are about 16.5 to 24, 13 to 16, 7.5 to 13.0 and 3.5 to 6.5 g/10 min., respectively. These are products of Bayer MaterialScience LLC of Pittsburgh, Pennsylvania.

Polyester , component (B), suitable in the present context include homo-polyesters and co-polyesters resins and mixtures thereof. Included in the term co-polyesters as used herein are polyester carbonates wherein the carbonate linkages are present in a minor molar amount relative to the ester linkages.

These known resins may be prepared by condensation or ester interchange polymerization of the diol component with the diacid according to known methods. Examples are esters derived from the condensation of a cyclohexanedimethanol with an ethylene glycol with a terephthalic acid or with a combination of terephthalic acid and isophthalic acid. Also suitable are polyesters derived from the condensation of a cyclohexanedimethanol with an ethylene glycol with a 1,4-Cyclohexanedicarboxylic acid. Suitable resins include poly(alkylene dicarboxylates), especially poly(ethylene terephthalate) (PET), poly(1,4-butylene terephthalate) (PBT), poly(trimethylene terephthalate) (PTT), poly(ethylene naphthalate) (PEN), poly(butylenes naphthalate) (PBN), poly(cyclohexanedimethanol terephthalate) (PCT), poly(cyclohexanedimethanol-co-ethylene terephthalate) (PETG or PCTG), and poly(1,4-cyclohexanedimethyl-1,4-cyclohexanedicarboxylate) (PCCD).

U.S. Patents 2,465,319, 3,953,394 and 3,047,539 - all incorporated herein by reference, disclose suitable methods for preparing such resins. The suitable polyalkylene terephthalates are characterized by an intrinsic viscosity of at least 0.2 and preferably about at least 0.4 deciliter/gram as measured by the relative viscosity of an 8% solution in orthochlorophenol at about 25°C. The upper limit is not critical but it generally does not exceed about 2.5 deciliters/gram. Especially preferred polyalkylene terephthalates are those with an intrinsic viscosity in the range of 0.4 to 1.3 deciliter/gram.

The alkylene units of the polyalkylene terephthalates which are suitable for use in the present invention contain from 2 to 5 , preferably 2 to 4 carbon atoms. Polybutylene terephthalate (prepared from 1,4-butanediol) and polyethylene terephthalate are the preferred polyalkylene tetraphthalates for use in the present invention. Other suitable polyalkylene terephthalates include polypropylene terephthalate, polyisobutylene terephthalate, polypentyl terephthalate, polyisopentyl terephthalate, and polyneopentyl terephthalate. The alkylene units may be straight chains or branched chains.

Component (C) of the inventive composition is clay, the particle size of which is in the order of nanometers (herein nanoclay). Nanoclay is known and has been described in U.S. Patent 5,747,560, which is incorporated herein by reference. Preferred clays include natural or synthetic phyllosilicates such as montmorillonite, hectorite, vermiculite, beidilite, saponite, nontronite or synthetic flouromica. A preferred nanoclay is exemplified by montmorillonite, hectorite or synthetic flouromica, more preferably montmorillonite or hectorite, and most preferably montmorillonite. The nanoclay preferably has an average platelet thickness ranging from about 1 nm to about 100 nm, and an average length and average width each ranging from about 50 nm to about 700 nm.

In the preferred embodiment the clay has been modified by a cation exchange reaction with a suitable organic salt such as quaternary ammonium, phosphonium and immidazolium salt. The suitable quaternary ammonium salts conform structurally to 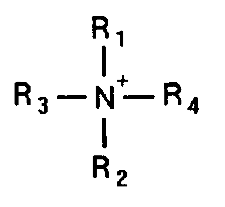 wherein R₁ denotes a linear or branched aliphatic or aromatic hydrocarbon radical or hydroxyalkyl containing 1 to 40 carbon atoms, R₂, R₃, and R₄ independently denote any of linear or branched aliphatic or aromatic hydrocarbon radical or hydroxyl alkyl radical containing 1 to 40 carbon atoms, oligomeric or polymeric alkylene-oxide or oligomeric or polymeric alkylene-ester. The suitable counter anions of the quaternary ammonium cation are chloride, bromide, iodide, methyl sulfate or acetate.

The suitable quaternary phosphonium salts conform structurally to conforms structurally to 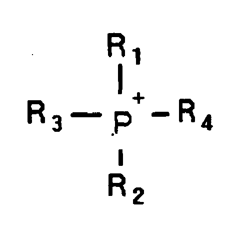 where R₁ denotes a linear or branched aliphatic or aromatic hydrocarbon radical or hydroxyalkyl containing 1 to 40 carbon atoms, R₂, R₃, and R₄ independently denote any of linear or branched aliphatic or aromatic hydrocarbon or hydroxyl alkyl radical containing 1 to 40 carbon atoms, oligomeric or polymeric alkylene-oxide or oligomeric or polymeric alkylene-ester and wherein counter anion is a member selected from the group consisting of chlorine, bromine, iodide, methyl sulfate and acetate.

Organically modified nanoclays are commercially available from Southern Clay Products, Inc. and Nanocor, Inc. under the trademarks of Cloisite and Nanomer, respectively. The preferred modified nanoclays, modified with quaternary ammonium salts, are Southern Clay's Cloistite grades10A, 20A and 25A.

The acid used as component (D) of the inventive composition is a carboxylic acid. Suitable acids include both aliphatic and aromatic acids. Fatty acids, both saturated and unsaturated are included within the suitable acids. Preferably, the carboxylic acid is aliphatic and most preferably it contains 2 to 30 carbon atoms. Citric acid is advantageously used.

The acid is used in the practice of the invention in an amount of 1 to 20, preferably 5 to 15, more preferably 8 to 12 percent relative to the weight of the nanoclay.

The preparation of the inventive composition is conventional and follows procedures and makes use of apparatus known by the art-skilled.

The invention is further illustrated but is not intended to be limited by the following examples in which all parts and percentages are by weight unless otherwise specified.

### EXAMPLES

Compositions in accordance with the present invention were prepared and their properties evaluated. The preparation of these compositions and their testing were conventional; the properties are tabulated below.

The components used in preparing the exemplified compositions were:
Polycarbonate 1: Makrolon 5208 a powder-form homopolycarbonate based on bisphenol-A having a melt flow rate (MFR) of 5.5 g/10 min. per ASTM D 1238 at a loading of 1.2kG at 300°C), a product of Bayer MaterialScience LLC.
Polycarbonate 2: Makrolon 3208 homopolycarbonate based on bisphenol A having a melt flow rate of about 5.1 g/10 min. per ASTM D 1238 at a loading of 1.2kG at 300°C), a product of Bayer Polymers LLC.
PET: polyethylene terephthalate, Versatray 12822, a product of Voridian, having intrinsic viscosity of 0.92 to 0.98
Clay: Cloisite 25A, a natural montmorillonite modified with a quaternary ammonium salt of dimethyl, hydrogenated tallow and 2-ethylhexyl with a methyl sulfate as an anion, product of Southern Clay Products.

The citric acid that was used in the course of the experiments was chemically pure grade.

The melt flow rate of the compositions was determined in accordance with ASTM D 1238 at a loading of 1.2kG at 300°C.

The instrumented impact strength (multi-axial) was determined using an Instron instrumented impact tester with 3 in. stage and 0.5 in. tup at a dart speed of 15 mph. The thickness of all the test specimens was 1/8".

**Table 1**

| | 1A | 1B | 1C | 1D | 1E | 1F |
|---|---|---|---|---|---|---|
| Polycarbonate 1, wt.% | 5.0 | 5.0 | 5.0 | 5.0 | 5.0 | 0.0 |
| Polycarbonate 2,wt.% | 95.0 | 75.0 | 55.0 | 35.0 | 15.0 | 0.0 |
| PET, wt.% | 0.0 | 20.0 | 40.0 | 60.0 | 80.0 | 100.0 |
| Properties: | | | | | | |
| Melt Flow Rate, | | | | | | |
| gm/10min | 5.5 | 8.0 | 8.3 | 6.1 | 5.3 | 31.3 |
| Flexural modulus, Kpsi | 348.3 | 358.6 | 362.2 | 364.2 | 364.6 | 355.8 |
| Flexural strain, % | 7.5 | 6.8 | 6.4 | 5.7 | 5.7 | 5.2 |
| Flexural strength at 5% | | | | | | |
| strain, Kpsi | 13.7 | 14.4 | 14.2 | 14.2 | 14.0 | 13.2 |
| Flexural strength, | | | | | | |
| ultimate, Kpsi | 15.1 | 15.4 | 14.9 | 14.5 | 14.2 | 13.2 |
| Impact strength, Izod, | | | | | | |
| @1/8" Unnotched, ft-Ib | 63.2 | 56.2 | 51.6 | 53.9 | 51.6 | 52 |
| Impact strength, Instrumented (total energy) at 1/8", @23°C, ft-Ib, | 56.8 | 50.7 | 46.2 | 47.3 | 48.6 | 44.5 |

Table 1 shows the properties of compositions containing polycarbonate and polyester. Accordingly, the inclusion of polyester (PET) brings about an increase in flexural modulus and a significant decline in impact properties.

**Table 2**

| | 2A | 2B | 2C | 2D | 2E | 2F |
|---|---|---|---|---|---|---|
| Polycarbonate 1,wt.% | 5.0 | 5.0 | 5.0 | 5.0 | 5.0 | 0.0 |
| Polycarbonate 2,wt.% | 90.0 | 71.0 | 52.0 | 33.0 | 14.0 | 0.0 |
| PET,wt.% | 0.0 | 19.0 | 38.0 | 57.0 | 76.0 | 95.0 |
| Clay,wt.% | 5.0 | 5.0 | 5.0 | 5.0 | 5.0 | 5.0 |
| Properties: | | | | | | |
| Melt Flow Rate, gm/10 min | 31.5 | 40.0 | 32.8 | 25.7 | 30.3 | 79.8 |
| Flexural modulus, Kpsi | 445.3 | 465.0 | 477.7 | 478.1 | 484.5 | 490.9 |
| Flexural strain,% | 6.2 | 5.9 | 5.5 | 5.2 | 4.8 | 2.9 |
| Flexural strength at 5% strain, Kpsi | 16.1 | 16.7 | 16.4 | 16.1 | 16.1 | Nd³ |
| Flexural strength, ultimate, Kpsi | 16.6 | 17.0 | 16.4 | 16.1 | 16.0 | 13.6 |
| Impact strength, Izod, @1/8" unnotched, ft-Ib | 27.8 | 21.1 | 59.4 | 30.9 | 15.1 | 6.6 |
| Impact strength, Instrumented (total energy) at 1/8" at 23°C, ft-Ib | 20.1 | 27.7 | 40.4 | 7.4 | 1.9 | 1 |

| | | | | | | |
|---|---|---|---|---|---|---|
| ³- less than 5% strain | | | | | | |

Comparing the results shown in Tables 2 and 3 point to that the increase in melt flow and decline in impact strength caused by the addition of clay are mitigated by the inclusion of acid in accordance with the invention.

**Table 3**

| | 3A | 3B | 3C | 3D | 3E | 3F |
|---|---|---|---|---|---|---|
| Polycarbonate 1, wt.% | 5.0 | 5.0 | 5.0 | 5.0 | 5.0 | 0.0 |
| Polycarbonate 2, wt.% | 89.5 | 70.6 | 51.7 | 32.8 | 13.9 | 0.0 |
| PET | 0.0 | 18.9 | 37.8 | 56.7 | 75.6 | 94.5 |
| Clay | 5.0 | 5.0 | 5.0 | 5.0 | 5.0 | 5.0 |
| Citric acid | 0.5 | 0.5 | 0.5 | 0.5 | 0.5 | 0.5 |
| Properties: | | | | | | |
| Melt Flow Rate,gm/10 min | 6.4 | 13.1 | 16.3 | 19.2 | 27.0 | 69.1 |
| Flexural modulus, Kpsi | 443.7 | 476.2 | 479.3 | 480.8 | 470.8 | 488.0 |
| Flexural strain,% | 6.1 | 5.9 | 5.7 | 5.5 | 4.8 | 3.1 |
| Flexural strength at 5% strain, Kpsi | 16.3 | 17.0 | 16.6 | 16.3 | 15.9 | Nd⁽³⁾ |
| Flexural strength, ultimate, Kpsi | 16.8 | 17.2 | 16.8 | 16.4 | 15.8 | 14.3 |
| | | | | | | |
| Impact strength , Izod, @1/8" unnotched ,ft-Ib | 62.8 | 60 | 60 | 31.4 | 16.5 | 6.9 |
| | | | | | | |
| Impact strength, Instrumented (total energy) at 1/8" at 23°C, ft-Ib | 43.7 | 44.8 | 44.8 | 31.6 | 2.3 | 0.9 |

| | | | | | | |
|---|---|---|---|---|---|---|
| ⁽³⁾- less than 5% strain | | | | | | |

The inventive composition is demonstrated by Examples 3B, 3C, 3D and 3E.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A thermoplastic composition comprising aromatic polycarbonate, polyester, nanoclay and carboxylic acid wherein the nanoclay is present in an amount of 0.1 to 30 percent relative to the total weight of polycarbonate and polyester, and wherein the amount of acid is about 1 to 20 percent relative to the weight of the nanoclay, said nanoclay having an average platelet thickness of 1 to 100 nm, and an average length and average width, independently one of the other, of 50 to 700 nm.

2. The thermoplastic molding composition of Claim 1 wherein the polycarbonate is present in an amount of 99 to 10 percent and the polyester is present in an amount of 1 to 90 percent, the percents, both occurrences being relative to the weight of the composition.

3. The thermoplastic molding composition of Claim 1 wherein the polycarbonate is present in an amount of 99 to 20 percent and the polyester is present in an amount of 1 to 80 percent, the percents, both occurrences being relative to the weight of the composition.

4. The thermoplastic molding composition of Claim 1 wherein the amount of the nanoclay is 0.1 to 15 percent.

5. The thermoplastic molding composition of Claim 1, wherein the nanoclay is montmorillonite modified with a quaternary ammonium salt or a quaternary phosphonium salt.

6. The thermoplastic molding composition of Claim 5, wherein the quaternary ammonium salt conforms structurally to 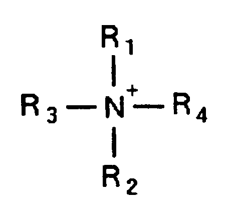 where R₁ denotes a linear or branched aliphatic or aromatic hydrocarbon radical or hydroxyalkyl containing 1 to 40 carbon atoms, R₂, R₃, and R₄ independently denote any of linear or branched aliphatic or aromatic hydrocarbon radical or hydroxyl alkyl radical containing 1 to 40 carbon atoms, oligomeric or polymeric alkylene-oxide or oligomeric or polymeric alkylene-ester and wherein the counter anion is a member selected from the group consisting of chlorine, bromine, iodide, methyl sulfate and acetate.

7. The thermoplastic molding composition of Claim 5 wherein quaternary phosphonium salt conforms structurally to 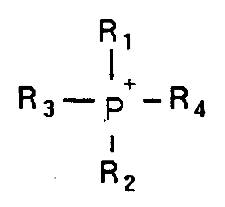 where R₁ denotes a linear or branched aliphatic or aromatic hydrocarbon radical or hydroxyalkyl containing 1 to 40 carbon atoms, R₂, R₃, and R₄ independently denote any of linear or branched aliphatic or aromatic hydrocarbon or hydroxyl alkyl radical containing 1 to 40 carbon atoms, oligomeric or polymeric alkylene-oxide or oligomeric or polymeric alkylene-ester and wherein counter anion is a member selected from the group consisting of chlorine, bromine, iodide, methyl sulfate and acetate.

8. The thermoplastic molding composition of Claim 1 wherein the acid is carboxylic acid.

9. The thermoplastic molding composition of Claim 8 wherein the carboxylic acid is aliphatic.

10. The thermoplastic molding composition of Claim 9 wherein the carboxylic acid is citric acid.

11. The thermoplastic molding composition of Claim 1, wherein the amount of acid is 5 to 15 percent relative to the weight of the nanoclay.

12. The thermoplastic molding composition of Claim 1, wherein the amount of acid is 8 to 12 percent relative to the weight of the nanoclay.

13. The thermoplastic molding composition of Claim 1, wherein the nanoclay is a member selected from the group consisting of montmorillonite, hectorite and synthetic flouromica.

14. The thermoplastic molding composition of Claim 1, wherein the nanoclay is montmorillonite.

## Patentansprüche

1. Thermoplastische Zusammensetzung, umfassend aromatisches Polycarbonat, Polyester, Nanoton und Carbonsäure, worin der Nanoton, bezogen auf das Gesamtgewicht von Polycarbonat und Polyester, in einer Menge von 0,1 bis 30 Prozent enthalten ist und worin die Säuremenge, bezogen auf das Gewicht des Nanotons, etwa 1 bis 20 Prozent beträgt, wobei der Nanoton eine mittlere Plättchendicke von 1 bis 100 nm und eine mittlere Länge und mittlere Breite von, unabhängig voneinander, 50 bis 700 nm aufweist.

2. Thermoplastische Formzusammensetzung nach Anspruch 1, worin das Polycarbonat in einer Menge von 99 bis 10 Prozent vorhanden ist und der Polyester in einer Menge von 1 bis 90 Prozent vorhanden ist, wobei sich beide Werte auf das Gewicht der Zusammensetzung beziehen.

3. Thermoplastische Formzusammensetzung nach Anspruch 1, worin das Polycarbonat in einer Menge von 99 bis 20 Prozent vorhanden ist und der Polyester in einer Menge von 1 bis 80 Prozent vorhanden ist, wobei sich beide Werte auf das Gewicht der Zusammensetzung beziehen.

4. Thermoplastische Formzusammensetzung nach Anspruch 1, worin die Menge des Nanotons 0,1 bis 15 Prozent beträgt.

5. Thermoplastische Formzusammensetzung nach Anspruch 1, worin der Nanoton mit einem quaternären Ammoniumsalz oder einem quaternären Phosphoniumsalz modifizierter Montmorillonit ist.

6. Thermoplastische Formzusammensetzung nach Anspruch 5, worin das quaternäre Ammoniumsalz der Struktur 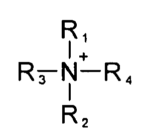 entspricht, worin R₁ für einen unverzweigten oder verzweigten, aliphatischen oder aromatischen Kohlenwasserstoff- oder Hydroxyalkylrest mit 1 bis 40 Kohlenstoffatomen steht, R₂, R₃ und R₄ unabhängig voneinander für einen unverzweigten oder verzweigten, aliphatischen oder aromatischen Kohlenwasserstoff- oder Hydroxyalkylrest mit 1 bis 40 Kohlenstoffatomen, ein oligomeres oder polymeres Alkylenoxid oder einen oligomeren oder polymeren Alkylenester stehen und worin das Gegenion aus der aus Chlor, Brom, Iod, Methylsulfat und Acetat bestehenden Gruppe ausgewählt ist.

7. Thermoplastische Formzusammensetzung nach Anspruch 5, worin das quaternäre Phosphoniumsalz der Struktur 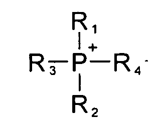 entspricht, worin R₁ für einen unverzweigten oder verzweigten, aliphatischen oder aromatischen Kohlenwasserstoff- oder Hydroxyalkylrest mit 1 bis 40 Kohlenstoffatomen steht, R₂, R₃ und R₄ unabhängig voneinander für einen unverzweigten oder verzweigten, aliphatischen oder aromatischen Kohlenwasserstoff- oder Hydroxyalkylrest mit 1 bis 40 Kohlenstoffatomen, ein oligomeres oder polymeres Alkylenoxid oder einen oligomeren oder polymeren Alkylenester stehen und worin das Gegenion aus der aus Chlor, Brom, Iod, Methylsulfat und Acetat bestehenden Gruppe ausgewählt ist.

8. Thermoplastische Formzusammensetzung nach Anspruch 1, worin die Säure eine Carbonsäure ist.

9. Thermoplastische Formzusammensetzung nach Anspruch 8, worin die Carbonsäure aliphatisch ist.

10. Thermoplastische Formzusammensetzung nach Anspruch 9, worin die Carbonsäure Citronensäure ist.

11. Thermoplastische Formzusammensetzung nach Anspruch 1, worin die Säuremenge, bezogen auf das Gewicht des Nanotons, 5 bis 15 Prozent beträgt.

12. Thermoplastische Formzusammensetzung nach Anspruch 1, worin die Säuremenge, bezogen auf das Gewicht des Nanotons, 8 bis 12 Prozent beträgt.

13. Thermoplastische Formzusammensetzung nach Anspruch 1, worin der Nanoton aus der aus Montmorillonit, Hectorit und synthetischem Fluorglimmer bestehenden Gruppe ausgewählt ist.

14. Thermoplastische Formzusammensetzung nach Anspruch 1, worin der Nanoton Montmorillonit ist.

## Revendications

1. Composition thermoplastique comprenant un polycarbonate aromatique, un polyester, une nanoargile et un acide carboxylique où la nanoargile est présente en une quantité de 0,1 à 30 % par rapport au poids total de polycarbonate et de polyester, et où la quantité d'acide est d'environ 1 à 20 % par rapport au poids de la nanoargile, ladite nanoargile ayant une épaisseur de feuillet moyenne de 1 à 100 nm, et une longueur moyenne et une largeur moyenne, indépendamment l'une de l'autre, de 50 à 700 nm.

2. Composition de moulage thermoplastique selon la revendication 1 où le polycarbonate est présent en une quantité de 99 à 10 % et le polyester est présent en une quantité de 1 à 90 %, les pourcentages, les deux valeurs étant relatives au poids de la composition.

3. Composition de moulage thermoplastique selon la revendication 1 où le polycarbonate est présent en une quantité de 99 à 20 % et le polyester est présent en une quantité de 1 à 80 %, les pourcentages, les deux valeurs étant relatives au poids de la composition.

4. Composition de moulage thermoplastique selon la revendication 1 où la quantité de nanoargile est 0,1 à 15 %.

5. Composition de moulage thermoplastique selon la revendication 1 où la nanoargile est de la montmorillonite modifiée avec un sel d'ammonium quaternaire ou un sel de phosphonium quaternaire.

6. Composition de moulage thermoplastique selon la revendication 5 où le sel d'ammonium quaternaire est conforme du point de vue structural à 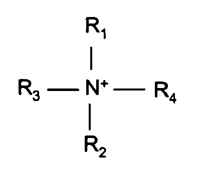 où R₁ désigne un radical hydrocarboné aliphatique ou aromatique linéaire ou ramifié ou un hydroxyalkyle contenant 1 à 40 atomes de carbone, R₂, R₃ et R₄ désignent indépendamment l'un quelconque d'un radical hydrocarboné aliphatique ou aromatique linéaire ou ramifié ou d'un radical hydroxyalkyle contenant 1 à 40 atomes de carbone, un oxyde d'alkylène oligomère ou polymère ou un ester d'alkylène oligomère ou polymère et où le contre-anion est un membre choisi dans le groupe consistant en chlore, brome, iodure, méthylsulfate et acétate.

7. Composition de moulage thermoplastique selon la revendication 5 où le sel de phosphonium quaternaire est conforme du point de vue structural à 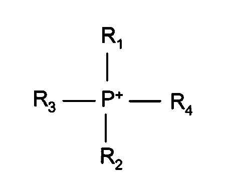 où R₁ désigne un radical hydrocarboné aliphatique ou aromatique linéaire ou ramifié ou un hydroxyalkyle contenant 1 à 40 atomes de carbone, R₂, R₃ et R₄ désignent indépendamment l'un quelconque d'un radical hydrocarboné aliphatique ou aromatique linéaire ou ramifié ou d'un radical hydroxyalkyle contenant 1 à 40 atomes de carbone, un oxyde d'alkylène oligomère ou polymère ou un ester d'alkylène oligomère ou polymère et où le contre-anion est un membre choisi dans le groupe consistant en chlore, brome, iodure, méthylsulfate et acétate.

8. Composition de moulage thermoplastique selon la revendication 1 où l'acide est un acide carboxylique.

9. Composition de moulage thermoplastique selon la revendication 8 où l'acide carboxylique est aliphatique.

10. Composition de moulage thermoplastique selon la revendication 9 où l'acide carboxylique est l'acide citrique.

11. Composition de moulage thermoplastique selon la revendication 1 où la quantité d'acide est 5 à 15 % par rapport au poids de la nanoargile.

12. Composition de moulage thermoplastique selon la revendication 1 où la quantité d'acide est 8 à 12 % par rapport au poids de la nanoargile.

13. Composition de moulage thermoplastique selon la revendication 1 où la nanoargile est un membre choisi dans le groupe consistant en la montmorillonite, l'hectorite et le fluoromica synthétique.

14. Composition de moulage thermoplastique selon la revendication 1 où la nanoargile est la montmorillonite.
